# EUROPÄISCHE PATENTSCHRIFT

(11) **EP 2 738 624 B1**
(45) Veröffentlichungstag und Bekanntmachung des Hinweises auf die Patenterteilung: **05.04.2017**
(21) Anmeldenummer: 14153284.6
(22) Anmeldetag: 31.10.2008
(51) Int. Cl.: G03H 1/20, G03H 1/04, B42D 25/00, G03H 1/02, G07D 7/00, G03H 1/22, G03H 1/00

(54) **Hologramm und Sicherheitsdokument mit Farbmuster unterschiedlicher Spektralfarben**
Hologram and security document with colour patterns of different spectral colours
Hologramme et document de sécurité avec échantillons de couleurs de différentes couleurs spectrales

(30) Priorität: 31.10.2007 DE 102007052951
(43) Veröffentlichungstag der Anmeldung: 04.06.2014
(62) Teilanmeldung aus: 08844653.9
(73) Patentinhaber: Bundesdruckerei GmbH, 10969 Berlin (DE)
(72) Erfinder: Leopold, André, 10119 Berlin (DE)
(74) Vertreter: Obst, Bernhard

(56) Entgegenhaltungen:
- EP-A- 0 375 185
- WO-A-2007/014317
- JP-A- H06 118 863
- HAMANO T ET AL: "COMPUTER-GENERATED HOLOGRAMS FOR RECONSTRUCTING MULTI 3-D IMAGES BY SPACE-DIVISION RECORDING METHOD", PROCEEDINGS OF SPIE, S P I E - INTERNATIONAL SOCIETY FOR OPTICAL ENGINEERING, US, vol. 3956, 24 January 2000 (2000-01-24), pages 23-32, XP009007446, ISSN: 0277-786X, DOI: 10.1117/12.380003 ISBN: 978-1-62841-839-2

## Beschreibung

Die Erfindung betrifft Hologramme als Sicherheitselemente, Sicherheitsdokumente, die solche Hologramme als Sicherheitselemente umfassen sowie Verfahren zur Herstellung solcher Hologramme und Sicherheitsdokumente sowie eine Vorrichtung zur Herstellung eines Hologramms als Sicherheitselement und eine Vorrichtung zur Verifizierung eines solchen Hologramms bzw. Sicherheitsdokuments.

Sicherheitselemente dienen dazu, Sicherheitsdokumente, die auch Wertdokumente umfassen, gegen Fälschung oder Kopieren zu sichern. Eine Art von Sicherheitselementen stellen Hologramme dar. In Sicherheitselementen sind oftmals auch individualisierende Angaben, beispielsweise Seriennummer, Ausweisnummer, biometrische Daten, Bilder (Passbilder), etc., enthalten. Diese können in Klarschrift bzw. Bildform oder optisch codiert bzw. maschinenlesbar vorgesehen sein.

Das grundsätzliche Vorgehen bei der Herstellung von Hologrammen ist beispielsweise in der Literaturstelle EP 0 896 260 A2 beschrieben. Die Grundzüge werden folgend kurz erläutert. Zunächst wird ein holografischer Master mit einem Masterhologramm hergestellt. Dann wird der holografische Master hinter ein holografisches Aufzeichnungsmaterial positioniert. Kohärentes Licht, beispielsweise aus einem Laser, wird auf die dem holografischen Master abgewandte Seite des holografischen Aufzeichnungsmaterials eingestrahlt, typischerweise mit definierter Wellenlänge und definiertem Inzidenzwinkel, nach Maßgabe des vom holografischen Master zu rekonstruierenden holografischen Musters. Es durchdringt das holografische Aufzeichnungsmaterial und wird vom Master gebeugt bzw. reflektiert, womit das Hologramm durch Interferenz mit dem einfallenden Licht erzeugt wird und sich das Hologramm in dem holografischen Aufzeichnungsmaterial abbildet und durch photochemische- oder photophysikalische Prozesse im holografischen Aufzeichnungsmaterial speichert. Dabei kann der holografische Master so ausgelegt sein, dass er für mehrere Wellenlängen empfindlich ist und diese entsprechend beugt. Auch andere als die beschriebene Anordnung können verwendet werden, um Hologramme herzustellen. Auch die EP 0 375 185 A2 beschreibt das Kopieren von Hologrammen.

Um Hologramme zu individualisieren, kann das kohärente Licht durch einen Spatial Light Modulator moduliert werden. Hierdurch wird dem Hologramm ein Individualisierungsmuster aufgeprägt.

Aus der Praxis sind digitale Projektoren bekannt, welche mit Spatial Light Modulatoren in Form von Liquid Crystal Displays (LCD) arbeiten. Die Funktionsweise entspricht beispielsweise der Projektion eines Dias, wobei der Spatial Light Modulator anstelle des Dias tritt.

Aus der Praxis sind des Weiteren digitale Projektoren bekannt, welche ein DMD (Digital Micro Mirror Device) als Spatial Light Modulator umfassen. Aus der Literaturstelle DE 2005 054 396 A1 ist der Einsatz eines Spatial Light Modulators in Form eines Digital Micro Mirror Device (DMD) zur Markierung von Gegenständen bekannt.

Aus der WO 2007/014317 A2 sind ein Verfahren und eine Vorrichtung zur Massenproduktion von Reflexionshologrammen bekannt. Dort ist vorgesehen, einen Master zu kopieren, welcher beispielsweise ein Zählwerk umfasst, um die nacheinander sequentiell hergestellten Hologramme individuell nummerieren zu können. Ist der Master farbig, so kann dieser über eine Einstrahlung von mehrfarbigem Laserlicht auch farbig kopiert werden. Hierbei werden die unterschiedlichen Farbinformationen in demselben Speicherbereich des Hologramms abgelegt.

Aus der JP-06-118863 A ist ein Verfahren zum Herstellen eines farbigen Lipmann-Hologramms bekannt.

Moderne Reisepässe und Personalausweise umfassen als ein Sicherheitselement ein Hologramm, welches mit einem das Passbild darstellenden Individualisierungsmuster individualisiert ist. Bei einer fortschreitenden Verbreitung der technischen Geräte, die zur Herstellung von Hologrammen, insbesondere von individualisierten Hologrammen, benötigt werden, ist zu befürchten, dass Dokumentenfälscher solche einfarbigen individualisierten Hologramme herstellen können. Benötigt werden somit Hologramme, deren Erzeugungsaufwand für Fälscher erhöht wird. Bekannt sind zum Beispiel so genannte Regenbogenhologramme. Bei diesen rekonstruiert das Motiv unter unterschiedlichen Winkeln, d.h. unter unterschiedlichen Rekonstruktionsgeometrien, in unterschiedliche Farben. Wird ein solches Hologramm mit einer Weißlichtquelle beleuchtet und während einer Betrachtung verkippt, so ändert sich für den Betrachter ein Farbeindruck des Hologramms, da in Abhängigkeit des Betrachtungswinkels das Hologramm jeweils ein in einer von verschiedenen spektralen Farben sichtbar ist.

Obwohl solche regenbogenfarbigen Hologramme einen Fälschungsaufwand deutlich erhöhen, weisen sie den Nachteil auf, dass sie sich als typischerweise metallisierte Prägestrukturen schwerer in ein Dokumentenkonzept integrieren lassen, während z.B. transparente Materialien weitere Sicherheitsmerkmale wie Sicherheitsdruck, lumineszierende Farben usw. unter dem holografischen Medium erlauben. Zudem sind keine individualisierten geprägten Regenbogenhologramme bekannt.

Der Erfindung liegt somit die technische Aufgabe zugrunde, ein Herstellungsverfahren sowie eine Vorrichtung zum Herstellen von Hologrammen sowie solche Hologramme und Sicherheitsdokumente sowie ein Verfahren zum Herstellen solcher Sicherheitsdokumente mit einem Hologramm als Sicherheitsmerkmal zu schaffen, bei denen das Hologramm gegenüber den bekannten Hologrammen schwieriger durch Fälscher herzustellen ist und dennoch eine zuverlässige Verifikation erlaubt. Ferner ist es Aufgabe der Erfindung, ein Verfahren und eine Vorrichtung zur Verifikation solcher verbesserter Hologramme bzw. mit solchen Hologrammen versehene Sicherheitsdokumente zu schaffen.

### Definitionen

Ein Sicherheitselement ist eine bauliche Einheit, die zumindest ein Sicherheitsmerkmal umfasst. Ein Sicherheitselement kann eine selbstständige bauliche Einheit sein, die mit einem Sicherheitsdokument, welches auch ein Wertdokument sein kann, verbunden, beispielsweise verklebt, werden kann. Es kann sich aber auch um einen integralen Bestandteil eines Sicherheitsdokumentes handeln. Ein Beispiel für Erstes ist ein auf ein Sicherheitsdokument aufklebbares Visum. Ein Beispiel für Letzteres ist ein in einen Geldschein oder einen Ausweis integriertes, beispielsweise einlaminiertes Hologramm.

Ein Sicherheitsmerkmal ist eine Struktur, die nur mit (gegenüber einfachem Kopieren) erhöhtem Aufwand oder gar nicht unautorisiert herstellbar bzw. reproduzierbar ist.

Ein Muster besteht typischerweise aus einer Vielzahl nebeneinander angeordneter Mustereinheiten bzw. Pixel. Die Mustereinheiten bzw. Pixel eines Musters sind einander zugeordnet und in definierter Weise lateral zueinander angeordnet, typischerweise in ein oder zwei Raumdimensionen, und ergeben in der Gesamtbetrachtung eine Darstellung, beispielsweise ein Bild, ein Symbol, ein Logo, einen Schriftzug (Buchstaben, Zahlen, alphanumerisch) oder einen Code (z.B. einen Barcode). Ein Individualisierungsmuster ist ein Muster, welches zur Individualisierung verwendet wird.

Als Sicherheits- und/oder Wertdokumente seien lediglich beispielhaft genannt: Personalausweise, Reisepässe, ID-Karten, Zugangskontrollausweise, Visa, Steuerzeichen, Tickets, Führerscheine, Kraftfahrzeugpapiere, Banknoten, Schecks, Postwertzeichen, Kreditkarten, beliebige Chipkarten und Haftetiketten (z.B. zur Produktsicherung). Solche Sicherheits- und/oder Wertdokumente weisen typischerweise ein Substrat, eine Druckschicht und optional eine transparente Deckschicht auf. Ein Substrat ist eine Trägerstruktur, auf welche die Druckschicht mit Informationen, Bildern, Mustern und dergleichen aufgebracht wird. Als Materialien für ein Substrat kommen alle fachüblichen Werkstoffe auf Papier- und/oder Kunststoffbasis in Frage.

Ein Spatial Light Modulator (SLM) erlaubt eine zweidimensional ortsaufgelöste Beleuchtung bzw. Bestrahlung eines meist flächigen Gegenstandes mit modulierter Intensität. Hierbei kann es sich beispielsweise um einen DMD (Digital Micro Mirror Device) Chip, ein LCD (Liquid Crystal Display) Transmissionsdisplay oder ein LCoS (Liquid Crystal on Silicon) Display handeln. Allen ist gemeinsam, dass eine Vielzahl von SLM-Pixeln gebildet ist, wobei jedes SLM-Pixel unabhängig von anderen SLM-Pixeln aktivierbar oder deaktivierbar ist (auch Zwischenstufen sind möglich), wodurch durch entsprechende Ansteuerung der SLM-Pixel sich Muster oder Bilder projizieren lassen. Durch die freie Ansteuerbarkeit können auch ohne weiteres verschiedene Bilder oder Muster in zeitlicher Folge hintereinander generiert werden, beispielsweise in Form eines Passfotos.

Ein Code bzw. Muster ist individualisierend, wenn er einzigartig für eine Person oder einen Gegenstand oder eine Gruppe von Personen oder Gegenständen aus einer größeren Gesamtmenge an Personen oder Gegenständen ist. Ein für eine Gruppe von Personen innerhalb der Gesamtmenge der Einwohner eines Landes individualisierender Code ist beispielsweise die Stadt des Wohnortes. Ein für eine Person individualisierender Code ist beispielsweise die Nummer des Personalausweises oder das Passbild. Ein für eine Gruppe von Geldscheinen innerhalb der Gesamtmenge der Geldscheine individualisierender Code ist die Wertigkeit. Für einen Geldschein individualisierend ist die Seriennummer. Beispiele für nicht individualisierende Codes bzw. Muster sind Wappen, Siegel, Hoheitszeichen, etc.

Ein holografisches Aufzeichnungsmaterial ist eine Schicht aus einem Material, welches photosensitiv ist, und in welcher sich Holografien durch irreversible, aber auch reversible photochemische und/oder photophysikalische Prozesse im Wege der Belichtung speichern lassen. Lediglich beispielhaft seien die in der Holografie oft verwendeten Photopolymere genannt.

Der Begriff der Farbe wird im Rahmen der Erfindung als eine Wellenlänge bzw. eine Spektrallinie verstanden. Mischfarben weisen mehrere verschiedene Wellenlängen bzw. Spektrallinien auf. Der Begriff der Farbe umfasst daher neben dem sichtbaren Bereich auch UV und IR.

Ein Volumenhologramm ist ein Hologramm, bei welchem sich die durch Interferenz gebildeten und abgebildeten Strukturen von einer Oberfläche des Hologramms oder holografischen Aufzeichnungsmaterials in dieses hinein erstrecken. Diese Strukturen können als mehrere Bragg-Ebenen in dem Material betrachtet werden. Ein Volumenhologramm weist daher eine hohe Wellenlängenselektivität auf, kann also nur mit der spektralen Farbe rekonstruiert werden, mit der es belichtet wurde.

Viele holografische Materialien weisen beim Fixieren einen Schrumpf- oder Schwellprozess auf, der die Rekonstruktionswellenlänge verschiebt. Dieser Effekt kann auch gezielt herbeigeführt werden, wie in EP 0919961 B1 beschrieben ist. In diesem Fall erfolgt die Rekonstruktion mit einer anderen Farbe als derjenigen, mit der belichtet wurde.

Der Ausdruck, ein Hologramm oder ein Bereich eines Hologramms "weise eine spektrale Farbe auf", soll ausdrücken, dass das Hologramm oder der Bereich nur mit der spektralen Farbe rekonstruiert werden kann, die es "aufweist". Bei einem Volumen-Reflexionshologramm bedeutet dieses, dass das Hologramm in der entsprechenden Farbe bei einer Betrachtung wahrgenommen wird, wenn es mit einer Weißlichtquelle beleuchtet wird, deren Licht die spektrale Farbe umfasst, die das Hologramm oder der Bereich "aufweist", d.h. mit dem das Hologramm oder der Bereich belichtet wurden.

### Grundzüge der Erfindung und bevorzugte Ausführungsformen

Zur Lösung der technischen Aufgabe wird vorgeschlagen, ein Hologramm als Sicherheitselement zu schaffen, welches als Volumenhologramm ausgebildet ist und das zumindest entlang einer Richtung Bereiche unterschiedlicher spektraler Farbe nach einem vorgegebenen Farbmuster aufweist. Ein Verfahren zur Herstellung eines solchen Hologramms als Sicherheitsmerkmal umfasst die Schritte: Bereitstellen eines Hologrammmasters, Anordnen eines holografischen Aufzeichnungsmaterials vor dem Hologrammmaster, Durchstrahlen des holografischen Aufzeichnungsmaterials mit kohärentem Licht, so dass zumindest ein Teil des kohärenten Lichts an dem Hologrammmaster reflektiert und/oder gebeugt wird und mit dem das holografische Aufzeichnungsmaterial durchstrahlenden kohärenten Licht interferiert, um in das holografische Aufzeichnungsmaterial das Hologramm zu belichten, wobei das Bereitstellen des Hologrammmasters das Bereitstellen eines Hologrammmasters umfasst, der an jeder Position kohärentes Licht unterschiedlicher spektraler Farben beugt und/oder reflektiert, und das kohärente Licht monochromatisch erzeugt oder monochromatisiert wird und das holografische Aufzeichnungsmaterial an unterschiedlichen Stellen entlang zumindest einer ausgezeichneten Richtung mit monochromatischem Licht unterschiedlicher spektraler Farben nach einem vorgegebenen Farbmuster belichtet wird, so dass ein Hologramm mit aneinander angrenzenden Bereichen unterschiedlicher spektraler Farben entsteht, wobei jeder der Bereiche genau eine der unterschiedlichen spektralen Farben aufweist.
Dieses bedeutet, dass aneinander angrenzende Bereiche des Hologramms entlang zumindest einer ausgezeichneten Richtung mit unterschiedlichem monochromatischem kohärentem Licht unterschiedlicher spektraler Farbe nach einem vorgegebenen Farbmuster belichtet werden. Die aneinander angrenzenden Bereiche können entlang der ausgezeichneten Richtung eine gleiche Ausdehnung oder unterschiedliche Ausdehnungen aufweisen. Die Ausdehnungen und die Farbabfolge sind durch das vorgegebene Farbmuster festgelegt. Eine hierzu verwendete Vorrichtung zur Herstellung eines Hologramms als Sicherheitsmerkmal umfasst einen Hologrammmaster, eine Aufnahme und/oder Führung für ein holografisches Aufzeichnungsmaterial und eine Lichtquelle, die kohärentes Licht emittiert, sowie eine Abbildungsoptik zum Führen des kohärenten Lichts, um das holografische Aufzeichnungsmaterial mit kohärentem Licht zu durchstrahlen, so dass zumindest ein Teil des kohärenten Lichts an dem Hologrammmaster gebeugt und/oder reflektiert wird, um mit dem das holografische Aufzeichnungsmaterial durchstrahlenden kohärenten Licht in dem holografischen Aufzeichnungsmaterial zu interferieren, wobei der Hologrammmaster an jeder Position kohärentes Licht unterschiedlicher spektraler Farben beugt und/oder reflektiert und die Lichtquelle ausgebildet ist, Licht unterschiedlicher spektraler Farben monochromatisch zu erzeugen, so dass unterschiedliche Bereiche des holografischen Aufzeichnungsmaterials mit Licht unterschiedlicher spektraler Farben abhängig von einer Position entlang einer ausgezeichneten Richtung des Hologramms nach einem vorgegebenen Farbmuster durchstrahlt und belichtet werden. Es entsteht somit ein Hologramm, das aneinander angrenzende Bereiche entlang mindestens einer ausgezeichneten Richtung umfasst, die eine unterschiedliche spektrale Farbe aufweisen. Da die einzelnen Bereiche jeweils genau eine spektrale Farbe aufweisen, ist eine Belichtung der einzelnen Bereiche so möglich, dass sich jeweils eine optimale Beugungseffizienz für die entsprechende spektrale Farbe ergibt. Hierdurch wird sichergestellt, dass ein farbiges Reflexionshologramm entsteht, welches einfach farbig unter einer Reflexionsgeometrie, beispielsweise mit einer Weißlichtquelle, zu betrachten ist. Ein bevorzugtes Verfahren zur Herstellung eines verbesserten Sicherheitsdokuments umfasst somit die Herstellung eines Reflexionshologramms nach dem soeben beschriebenen Verfahren und einem Verfahrensschritt einer Integration des Reflexionshologramms in das Sicherheitsdokument. Da die Belichtung mit den unterschiedlichen spektralen Farben nach einem vorgegebenen Farbmuster ausgeführt wird, sieht eine bevorzugte Verifizierung eines Hologramms bzw. eines Sicherheitsdokuments mit einem solchen Hologramm vor, dass das Hologramm mit Licht unterschiedlicher spektraler Farben rekonstruiert wird und spektral aufgelöst erfasst wird und ein Farbmuster ermittelt wird, welches eine Farbfolge und Ausdehnung von Bereichen entlang mindestens einer Richtung des Hologramms angibt und dieses ermittelte Farbmuster mit einem vorgegebenen Farbmuster verglichen wird.

Eine entsprechende Verifizierungsvorrichtung für ein Hologramm und/oder ein Sicherheitsdokument mit einem solchen Hologramm umfasst eine Lichtquelle, die Licht unterschiedlicher spektraler Farben erzeugen kann, und eine Erfassungseinheit, die das rekonstruierte Hologramm spektral aufgelöst erfassen kann, und eine Auswerteeinheit, die aus dem spektral aufgelöst erfassten rekonstruierten Hologramm ein Farbmuster ermittelt, welches eine Farbfolge und Ausdehnung von Bereichen entlang mindestens einer ausgezeichneten Richtung des Hologramms angibt, und eine Vergleichseinheit zum Vergleichen des Farbmusters mit dem vorgegebenen Farbmuster.

Die Erfindung weist den Vorteil auf, dass ein farbiges Hologramm entsteht, zu dessen Fälschung kohärentes Licht unterschiedlicher spektraler Farben benötigt wird, andererseits jedoch eine Erfassung des Hologramms weiterhin einfach vollständig möglich ist. Alle Bereiche, die unterschiedliche spektrale Farben aufweisen, beugen jeweils eine entsprechende Farbe effizient, da die einzelnen Bereiche jeweils als Volumenhologramme ausgeführt sind und eine gute Wellenlängenselektivität besitzen.
Eine Kontaktkopie eines so hergestellten Hologramms ist zwar prinzipiell möglich, jedoch nur dann, wenn die Belichtung an jeder Stelle mit kohärentem Licht erfolgt, das genau der spektralen Farbe des entsprechenden Bereichs entspricht, mit der das Hologramm ursprünglich hergestellt wurde. Ansonsten treten bei einer Rekonstruktion des abkopierten (gefälschten) Hologramms deutlich wahrnehmbare Helligkeitsschwankungen auf.

Erfindungsgemäß ist vorgesehen, dass die unterschiedlichen spektralen Farben im sichtbaren Spektralbereich liegen und bei einer Rekonstruktion mit einer weißen Lichtquelle, die Licht der Wellenlänge der unterschiedlichen spektralen Farben umfasst, von einem menschlichen Betrachter unter einer vorgegebenen Beleuchtungswinkel-Betrachtungswinkel-Geometrie zeitgleich die unterschiedliche spektrale Farben aufweisenden Bereiche als ein farbiges Gesamthologramm wahrgenommen werden.

Weiter ist erfindungsgemäß vorgesehen, dass die einzelnen Bereiche des Hologramms für die unterschiedlichen spektralen Farben jeweils die gleiche Rekonstruktionsgeometrie aufweisen. Dies bedeutet, dass ein Beleuchtungswinkel, unter dem die unterschiedlichen spektralen Farben bei einer Rekonstruktion das Hologramm beleuchten, und ein Betrachtungswinkel für die unterschiedlichen spektralen Farben jeweils identisch sind. Dies bietet den Vorteil, dass eine einfache Sichtkontrolle mit einer Weißlichtquelle ausgeführt werden kann, die Licht der unterschiedlichen spektralen Farben umfasst.

Die Herstellung eines solchen Hologramms ist besonders mit einem Hologrammmaster möglich, der selbst eine holografische Abbildung einer Mattscheibe darstellt, die Licht unterschiedlicher spektraler Farben jeweils an ein und demselben Ort nahezu identisch streut. Bei einer bevorzugten Ausführungsform des Verfahrens zur Herstellung eines Hologramms ist daher vorgesehen, dass der Hologrammmaster durch holografische Abbildung einer Mattscheibe hergestellt wird, die Licht der unterschiedlichen spektralen Farben an einem Ort jeweils gleich streut, das heißt Licht unterschiedlicher spektraler Farben unter gleichen geometrischen Bedingungen abbildet. Bei der Herstellung wird vorzugsweise die Mattscheibe zunächst in ein Transmissionsholgramm abgebildet. Dieses wird so rekonstruiert, dass eine Rekonstruktion in einem holografischen Aufzeichnungsmaterial entsteht und dort in ein Reflexionshologramm belichtet wird, welches den Hologrammmaster darstellt.

Erfindungsgemäß sind die Beugungseffizienzen des Hologramms bezüglich der unterschiedlichen spektralen Farben nahezu identisch. Dies bedeutet, dass die Beugungseffizienzen für unterschiedliche spektrale Farben in den unterschiedlichen spektralen Bereichen gleich sind, sofern der Hologrammmaster in den zu den Bereichen korrespondierenden Abschnitten eine identische Struktur aufweist. Dies bedeutet, dass mehrere unterschiedliche Hologramme, bei denen derselbe Bereich bzw. Abschnitt des Hologrammmasters in die unterschiedlichen Hologramme mit unterschiedlichen spektralen Farben abgebildet wird, die verschiedenen Hologramme in demselben Bereich jeweils nahezu die gleiche Beugungseffizienz unabhängig von der jeweils verwendeten spektralen Farbe aufweisen. Abhängig von einer verwendeten Dicke des holografischen Aufzeichnungsmaterials können jedoch leichte Abweichungen abhängig von der Farbe auftreten. Eine maximale Beugungseffizienz ist bei geringen Dicken des Aufzeichnungsmaterials von der Wellenlänge abhängig, wenn sich die Braggebenen des Hologramms durch die gesamte Dicke des holografischen Aufzeichnungsmaterials erstrecken. Die Anzahl der Braggebenen in dem Aufzeichnungsmaterial hängt in diesem Fall von der Wellenlänge ab.

Erfindungsgemäß umfasst das Hologramm ein Individualisierungsmuster.

Das Hologramm wird bevorzugt entlang der ausgezeichneten Richtung aus monochromatischen Teilhologrammen unterschiedlicher spektraler Farben erstellt. Diese Teilhologramme sind vorzugsweise streifenförmig und als Volumen-Reflexionshologramme ausgebildet. Dies bedeutet, dass das kohärente Licht als Streifen erzeugt wird und den Hologrammmaster jeweils streifenweise abbildet.

Zur Verifikation eines Hologramms auf Echtheit kann die Beugungseffizienz der einzelnen Farben ausgewertet und mit Vorgabewerten und/oder Erwartungswerten verglichen werden. Dieses kann maschinell erfolgen. Gefälschte Hologramme, bei denen einzelne oder alle Farben eine geringere Beugungseffizienz als bei echten Hologrammen aufweisen, können auch bei einer Sichtkontrolle durch menschliches Kontrollpersonal erkannt werden, da die einzelnen Farben als schwächer "leuchtend" als erwartet wahrgenommen werden. Ein mittels einer Kontaktkopie eines Originalhologramms hergestellte Fälschung, bei der die Wellenlänge des bei der Fälschung verwendeten Lichts nicht optimal mit der für eine Rekonstruktion des originalen Hologramms vorgesehenen Wellenlänge übereinstimmt, wird eine niedrigere Beugungseffizienz für diese Wellenlänge als das Originalhologramm aufweisen. Diese Beugungseffizienzunterschiede sind beim Vergleich von Original und Fälschung und für geübte Personen auch bei einem Vergleich der Fälschung mit einem erwarteten Farbeindruck erkennbar.

Hierbei wird selbstverständlich vorausgesetzt, dass eine Belichtung, insbesondere eine Belichtungszeit, des entsprechenden Bereichs jeweils optimal für die entsprechende spektrale Farbe gewählt ist, so dass sich für diese eine optimale gewünschte Beugungseffizienz ergibt.

Da bekannte holografische Aufzeichnungsmaterialien hinsichtlich der unterschiedlichen spektralen Farben zumeist eine unterschiedliche Empfindlichkeit aufweisen, muss eine Belichtungszeit für die unterschiedlichen spektralen Farben jeweils angepasst werden. Bei einer bevorzugten Ausführungsform der Erfindung wird der Hologrammmaster beim Belichten des Hologramms schrittweise abgetastet und das Hologramm somit aus Teilhologrammen zusammengesetzt.

Besonders bevorzugt wird eine Ausführungsform des Verfahrens, bei der das holografische Aufzeichnungsmaterial und der Hologrammmaster einerseits und das kohärente Licht einer Lichtquelle andererseits relativ zueinander bewegt werden, wobei eine Relativgeschwindigkeit angepasst an eine spektrale Empfindlichkeit des holografischen Aufzeichnungsmaterials für die jeweils aktuell zur Belichtung verwendete spektrale Farbe des kohärenten Lichts angepasst wird.

So ist es selbstverständlich möglich, eine Intensität des kohärenten Lichts der unterschiedlichen spektralen Farben und/oder eine Belichtungsdauer jeweils an eine entsprechende spektrale Empfindlichkeit des holografischen Aufzeichnungsmaterials anzupassen. Die Belichtungsdauer kann hierbei beispielsweise über die Relativgeschwindigkeit gesteuert werden. Die erfindungsgemäße Vorrichtung umfasst somit vorzugsweise eine Antriebseinheit, die ausgebildet ist, eine Relativbewegung des kohärenten Lichts einerseits und des holografischen Aufzeichnungsmaterials und des Hologrammmasters andererseits zu bewirken.

Bei einer bevorzugten Ausführungsform ist eine Steuereinheit vorgesehen, um die Relativbewegung und/oder eine Intensität des Lichts abhängig von einer spektralen Empfindlichkeit des holografischen Aufzeichnungsmaterials bezüglich der entsprechend verwendeten spektralen Farbe zu steuern. Wie ausgeführt kann hierüber erreicht werden, dass in jedem Bereich, der vorzugsweise jeweils ein monochromatisches Teilhologramm darstellt, eine Belichtung so erfolgt, dass eine optimale Beugungseffizienz hinsichtlich der entsprechenden spektralen Farbe in dem Hologramm erreicht wird. Bei einer Ausführungsform ist vorgesehen, dass die Steuereinheit ausgebildet ist, die Relativbewegung und eine Auswahl der entsprechenden der unterschiedlichen spektralen Farben der Lichtquelle abhängig von einem vorgegebenen Farbmuster, welches eine Farbfolge der unterschiedlichen Bereiche und eine Ausdehnung der Bereiche entlang der Richtung angibt, zu steuern.

Soll eine Belichtung des Hologramms mit einer stetigen Relativbewegung ausgeführt werden, so ist ein spektraler Wechsel innerhalb einer Zeit vorzunehmen, die klein im Verhältnis zu den Belichtungszeiten des holografischen Aufzeichnungsmaterials für die unterschiedlichen spektralen Farben ist. Nur so kann sichergestellt werden, dass einzelne Bereiche des Hologramms an den Übergängen zwischen den unterschiedlichen Bereichen auch jeweils eine hohe Beugungseffizienz für die unterschiedlichen spektralen Farben aufweisen.

Eine Fälschung eines Hologramms ist drastisch erschwert, wenn das Hologramm ein Individualisierungsmuster umfasst. Um ein solches herzustellen, wird das kohärente Licht über einen Spatial Light Modulator vor dem Durchstrahlen des holografischen Aufzeichnungsmaterials zur Ausprägung eines Individualisierungsmusters in dem Hologramm moduliert. Die Modulation findet somit vor dem Durchstrahlen des holografischen Aufzeichnungsmaterials und auch vor einer Beugung oder Reflexion an dem Hologrammmaster auf. Als Spatial Light Modulatoren kommen insbesondere Liquid Crystal on Silicon, DMDs und LCD-Displays in Betracht.

Besonders bevorzugt wird jedoch eine Belichtung des Hologramms mit den unterschiedlichen spektralen Farben in einem Schritt-und-Wiederholung-Verfahren (Step-and-Repeat-Verfahren) erfolgt. Bei einem solchen Verfahren kann ein Spatial Light Modulator verwendet werden, der angepasst an eine Breite des zur Belichtung verwendeten streifenförmigen kohärenten Lichts angepasst ist. Beispielsweise kann vorteilhaft ein Zeilendisplay verwendet werden, das eine oder mehrere Pixelreihen umfasst. Dieses wird jeweils so angesteuert, dass ein Teilbereich des Individualisierungsmusters dargestellt wird, der zu dem entsprechenden Abschnitt des Hologramms, welcher belichtet wird, entspricht. Bei einer solchen Ausführung werden das holografische Auszeichnungsmaterial und der Hologrammmaster einerseits und das kohärente Licht andererseits schrittweise synchronisiert mit der veränderten Ansteuerung des Spatial Light Modulators, wenn dieser als Zeilendisplay ausgebildet ist, relativ zueinander bewegt.

Wird ein flächiger Spatial Light Modulator verwendet, so ist eine Synchronisation einer Bewegung des kohärenten Lichts über den Spatial Light Modulator mit diesem nicht erforderlich, so dass eine Steuerung einfacher möglich ist. Eine Relativbewegung des kohärenten Lichts zu dem holografischen Aufzeichnungsmaterial und dem Hologrammmaster kann auf einfache Weise über eine Abbildungsoptik erfolgen, die zugleich ein Abscannen des flächig ausgebildeten Spatial Light Modulators bewirkt. Eine Fälschungssicherheit des Hologramms und eines hiermit ausgerüsteten Sicherheitsdokuments wird insbesondere dadurch erhöht, dass mittels der Bereiche des Hologramms, die eine unterschiedliche spektrale Farbe aufweisen, ein Individualisierungsmerkmal codiert ist bzw. wird. Eine Farbabfolge der unterschiedlichen Bereiche und eine Ausdehnung der unterschiedlichen Bereiche entlang der Richtung definiert ein Farbmuster. Dieses wird bevorzugt individuell für jedes Hologramm vorgegeben.

Eine besonders hohe Fälschungssicherheit erreicht man, wenn das vorgegebene Farbmuster sich aus einem dem Hologramm oder einem beispielsweise einem Sicherheitsdokument zugeordneten primären Merkmal, insbesondere einem Individualisierungsmerkmal, mit einem eindeutigen, jedoch nicht umkehrbaren Rechenalgorithmus errechnen lässt. Als primäres Merkmal können beispielsweise bei einem Sicherheitsdokument eine Ausweisnummer, ein Name, ein Geburtsdatum usw. oder auch ein Passbild oder andere biometrische Daten oder eine Kombination hieraus, die in das Sicherheitsdokument codiert sind, verwendet werden.

Ebenso ist es selbstverständlich möglich und von besonderem Vorteil, wenn das Individualisierungsmuster als primäres Merkmal verwendet wird. Auf diese Weise ist eine Verknüpfung zwischen dem Individualisierungsmuster und dem Farbmuster, welches die Abfolge und Ausdehnung der entlang der Richtung des Hologramms aufeinander folgenden Bereiche unterschiedlicher spektraler Farbe angibt, festgelegt. Wird das Individualisierungsmuster, beispielsweise ein Passbild, verändert, so verändert sich auch das zugehörige Farbmuster, mit dem ein solches Hologramm hergestellt wird. Dadurch, dass ein eindeutiger, jedoch nicht umkehrbarer Rechenalgorithmus verwendet wird, ist es bei Geheimhaltung des Rechenalgorithmus oder des privaten Schlüssels für Fälscher nicht möglich, das korrekte Farbmuster zu erlangen.

Der Rechenalgorithmus muss selbstverständlich nicht eineindeutig in der Weise sein, dass zu jedem Individualisierungsmuster genau ein Farbmuster zugeordnet ist. Vielmehr können ähnliche Individualisierungsmuster demselben Farbmuster zugeordnet sein. Ebenso ist es möglich, dass selbst stark unterschiedliche Individualisierungsmuster demselben Farbmuster zugeordnet sind. Ist jedoch die Anzahl der verwendeten Farbmuster groß genug, so ist eine Wahrscheinlichkeit, ein über den Rechenalgorithmus zugeordnetes Farbmuster zu einem speziellen Individualisierungsmuster zu erraten, sehr gering, so dass eine Fälschung eines individualisierten Hologramms nahezu unmöglich ist.

Für eine Verifizierung eines Hologramms, bei dem das Farbmuster sich aus einem primären Merkmal, insbesondere dem Individualisierungsmuster des Hologramms, herleiten lässt, wird das primäre Merkmal erfasst, das vorgegebene Farbmuster errechnet und mit dem erfassten Farbmuster verglichen.

Um jedoch den einzelnen Prüfstellen den Rechenalgorithmus nicht bereitstellen zu müssen, beispielsweise über eine Codierung in einen Rechenchip, ist es vorteilhaft, das aus dem primären Merkmal abgeleitete Farbmuster oder anderweitig vorgegebene Farbmuster in dem Sicherheitsdokument codiert abzulegen. Vorteilhafterweise ist das codiert abgelegte Farbmuster in verschlüsselter Form und/oder gesichert gegen einen Zugriff Unbefugter beispielsweise in einem in das Sicherheitsdokument integrierten Chip abgelegt. Selbst wenn die Verschlüsselung des Farbmusters von Fälschern entschlüsselt werden könnte, wären Fälscher zwar in der Lage, ein Hologramm in dem betreffenden Sicherheitsdokument auszutauschen (sofern dieses ohne eine Beschädigung weiterer Sicherheitselemente überhaupt möglich ist), in dem sie ein mit einem gefälschten Individualisierungsmuster versehenes Hologramm mit dem in dem Sicherheitsdokument codierten Farbmuster erzeugen, jedoch ließe sich die Fälschung des Hologramms auch in einem solchen Fall nachweisen, wenn das "korrekte Farbmuster" anhand des Rechenalgorithmus bestimmt und mit dem tatsächlich verwendeten Farbmuster verglichen würde.

Um eine einfache Prüfung des Hologramms durch eine Sichtprüfung zu ermöglichen, ist bei einer bevorzugten Ausführungsform der Erfindung vorgesehen, dass das Hologramm hinsichtlich einer Rekonstruktion für die unterschiedlichen spektralen Farben eine identische Winkelselektivität aufweist. Ein leichtes Verkippen des Hologramms gegenüber der optimalen Rekonstruktionsgeometrie betrifft somit die Bereiche unterschiedlicher spektraler Farbe jeweils in gleicher Weise.

Um ein Hologramm möglichst fälschungssicher in einem Sicherheitsdokument zu integrieren, wird das Hologramm vorzugsweise hergestellt und zwischen zwei Schichten angeordnet, die anschließend mit gegebenenfalls weiteren Schichten zu einem Dokumentkörper laminiert werden. Alternativ kann das Hologramm auf einem Dokumentkörper aufgeklebt und gegebenenfalls mit einer Kratzschutzfolie oder einem Kratzschutzlack abgedeckt werden. Verfahren hierzu sind beispielsweise in der noch nicht offengelegten Patentanmeldung DE 10 2006 048 464 beschrieben.

In das Sicherheitsdokument können selbstverständlich auch andere Sicherheitselemente und - merkmale integriert werden.

Die Erfindung wird nachfolgend unter Bezugnahme auf eine Zeichnung näher erläutert. Hierbei zeigen:
- Fig. 1: eine schematische Darstellung einer Vorrichtung zum Herstellen eines Hologramms;
- Fig. 2: eine schematische Darstellung eines Hologramms;
- Fig. 3: eine schematische Darstellung eines Verfahrens zum Herstellen eines Sicherheitsdokuments, welches ein Verfahren zum Herstellen eines Hologramms umfasst; und
- Fig. 4: eine schematische Darstellung einer Vorrichtung zur Verifizierung eines Hologramms oder Sicherheitsdokuments.

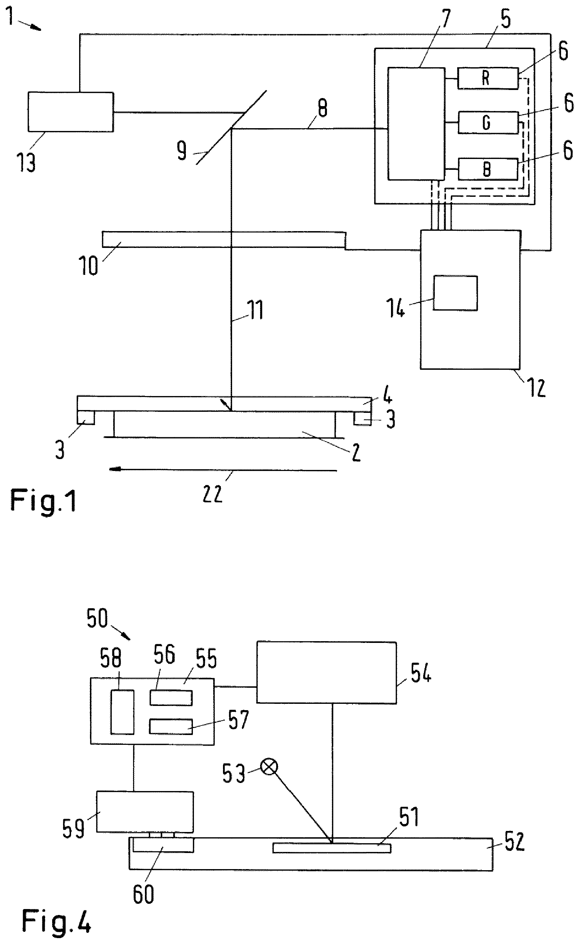

In Fig. 1 ist schematisch eine Vorrichtung 1 zum Herstellen eines Hologramms dargestellt. Vor einem Hologrammmaster 2 ist auf einer Führung 3 ein holografisches Aufzeichnungsmaterial 4 angeordnet. Die Führung 3 ist relativ zu dem Hologrammmaster 2 so angeordnet, dass das holografische Aufzeichnungsmaterial 4 vorzugsweise vollflächig in Kontakt mit dem Hologrammmaster 2 ist. Für den Fachmann versteht es sich, dass hierbei eine transparente Schutzschicht (nicht dargestellt), vorzugsweise aus Polyethylenterephthalat (PET), zwischen dem holografischen Aufzeichnungsmaterial 4 und dem Hologrammmaster 2 angeordnet sein kann. Diese Schutzschichten erleichtert ein Ablösen des holografischen Aufzeichnungsmaterials 4 von dem Hologrammmaster 2, nachdem das Hologramm fertig in das holografische Aufzeichnungsmaterial 4 belichtet ist.

Der Hologrammmaster 2 ist vorzugsweise eine holografisch hergestellte Struktur, die durch ein holografisches Abbilden einer Mattscheibe mit unterschiedlichen spektralen Farben erzeugt ist, und die Eigenschaft aufweist, an jeder Position Licht der unterschiedlichen spektralen Farben nahezu identisch, insbesondere unter identischen Winkeln, zu beugen.

Die Vorrichtung 1 umfasst ferner eine Lichtquelle 5, die in der Lage ist, kohärentes Licht der verschiedenen spektralen Farben zu erzeugen. Hierfür kann die Lichtquelle 5 beispielsweise mehrere Laser 6 umfassen, die Licht der verschiedenen spektralen Farben erzeugen. Die Lichtquelle 5 ist so ausgestaltet, dass sie über eine Zusammenführ- und Auswahleinheit 7 selektiv gesteuert jeweils Licht einer ausgewählten spektralen Farbe der verschiedenen spektralen Farben bereitstellt.

Das kohärente Licht 8 wird von der Lichtquelle 5 vorzugsweise als streifenförmiger Lichtstrahl bereitgestellt. Dies bedeutet, dass der Lichtstrahl quer zur Ausbreitungsrichtung entlang einer Raumdimension ausgedehnt ist. Diese Ausdehnung entspricht vorzugsweise zumindest einer Breite oder Höhe des Hologramms, welches hergestellt werden soll. Im dargestellten Beispiel ist das kohärente Licht 8 senkrecht zur Zeichenebene streifenförmig ausgedehnt.

Die Vorrichtung 1 umfasst ferner eine Abbildungsoptik, die hier vereinfachend als Umlenkspiegel 9 dargestellt ist. Die Abbildungsoptik ist so ausgebildet, dass das kohärente Licht 8 durch einen Spatial Light Modulator 10 geführt wird, in dem dieses räumlich moduliert wird. Dies bedeutet, dass unterschiedliche Positionen entlang der streifenförmigen Ausdehnung des kohärenten Lichts 8 quer zur Ausbreitungsrichtung unterschiedlich moduliert werden. Die Modulation erfolgt entsprechend eines Individualisierungsmusters für das Hologramm. Im Strahlengang des kohärenten Lichts (8, 11) ist somit ein Spatial Light Modulator (10) (SLM) angeordnet, um das kohärente Licht (8, 11) mit einem Individualisierungsmuster zu modulieren. Der modulierte kohärente Lichtstrahl 11 durchstrahlt das holografische Aufzeichnungsmaterial 4 und wird zumindest zum Teil an dem Hologrammmaster gebeugt und/oder reflektiert. Das reflektierte und/oder gebeugte Licht interferiert mit dem das holografische Aufzeichnungsmaterial durchstrahlenden Licht 11 und belichtet so das Hologramm in das holografische Aufzeichnungsmaterial 4.

Eine Steuereinheit 12 der Vorrichtung 1 ist ausgebildet, eine Auswahl einer der spektralen Farben der Lichtquelle 5 zu steuern und darüber hinaus eine Relativbewegung zwischen dem kohärenten Licht 8 bzw. modulierten kohärenten Licht 11 einerseits und andererseits dem holografischen Aufzeichnungsmaterial 4 und dem Hologrammmaster 2 zu steuern. Hierfür ist die Steuereinheit 12 mit einer Antriebseinheit 13 verbunden. Diese ist in der dargestellten Ausführungsform so mit der Abbildungsoptik, d.h. dem Umlenkspiegel 9, gekoppelt, dass über eine Verschiebung des Umlenkspiegels synchronisiert der Spatial Light Modulator 10 sowie der Hologrammmaster 2 streifenweise abgetastet werden. Die Steuereinheit 12 ist ferner so ausgebildet, dass eine Belichtungszeit in dem holografischen Aufzeichnungsmaterial jeweils angepasst an eine spektrale Empfindlichkeit des holografischen Aufzeichnungsmaterials 4 und an die jeweils zur Belichtung des Hologramms verwendete ausgewählte spektrale Farbe des kohärenten Lichts 8, 11 angepasst ist. Die erforderliche Belichtungszeit hängt von der Intensität des kohärenten Lichts und der spektralen Empfindlichkeit des holografischen Aufzeichnungsmaterials 4 ab. Somit kann die Steuereinheit 12 entweder eine Intensität der Lichtquelle und/oder eine Relativgeschwindigkeit des Scanstrahls und/oder eine Belichtungsdauer in einer Position des holografischen Aufzeichnungsmaterials 4 steuern.

Die Farbauswahl wird gemäß einem vorgegebenen Farbmusters ausgeführt. Hierüber wird auch die Relativbewegung des Lichts relativ zu dem Aufzeichnungsmaterial 4 und dem Hologrammmaster 2 gesteuert. Bevorzugt erfolgt die Relativbewegung schrittweise.

Die Steuereinheit 12 umfasst eine Berechnungseinheit 14, die ausgebildet ist, Informationen über ein Primärmerkmal mit einem eindeutigen, jedoch nicht umkehrbaren Rechenalgorithmus in das vorgegebene Farbmuster umzurechnen. Das vorgegebene Farbmuster gibt eine Farbabfolge der verschiedenen Spektralfarben sowie eine Ausdehnung der unterschiedlich farbigen Bereiche des Farbmusters an. Vorzugsweise wird das vorgegebene Farbmuster ausgehend von dem Individualisierungsmuster oder eines Teils hiervon errechnet, welches die Steuereinheit nutzt, um den Spatial Light Modulator anzusteuern, um das Hologramm zu individualisieren.

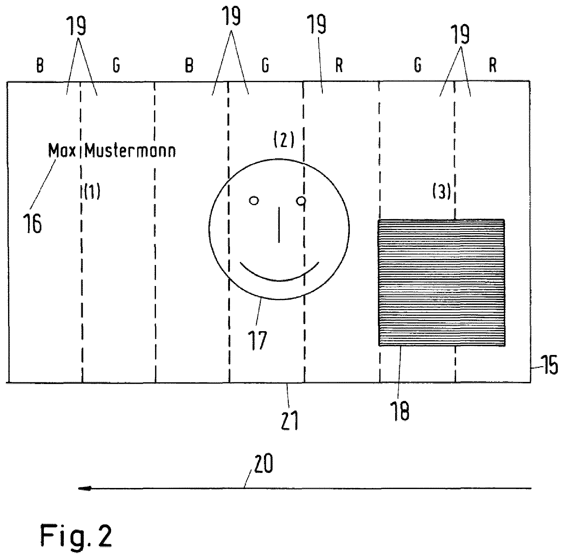

In Fig. 2 ist ein beispielhaftes Hologramm 15 schematisch dargestellt. Das Hologramm 15 umfasst einen Namen 16, eine bildliche Wiedergabe eines Gesichts 17 (Passfoto) sowie eine hier beispielhaft als Quadrat ausgeführte Struktur 18 als Individualisierungsmerkmale. Gemeinsam bilden diese Individualisierungsmerkmale ein Individualisierungsmuster. Einzelne Bestandteile, beispielsweise die Struktur 18, kann für mehrere hergestellte Hologramme, welche beispielsweise für Reisepässe von unterschiedlichen Personen hergestellt werden, identisch sein und beispielsweise ein Wappen darstellen.

Das Hologramm 15 ist in einer Anzahl von streifenförmigen Bereichen 19 unterteilt, die unterschiedliche spektrale Farben aufweisen, welche durch über den Bereichen 19 angeordnete Buchstaben R für Rot, G für Grün und B für Blau gekennzeichnet sind. Entlang einer ausgezeichneten Richtung 20, welche parallel zu einer Längsseite 21 des Hologramms ausgerichtet ist, grenzen diese unterschiedliche spektrale Farben aufweisenden Bereiche aneinander und bilden das Hologramm 15. Die einzelnen Bereiche 19 stellen Teilhologramme dar, die jeweils einen mit der entsprechenden spektralen Farbe belichteten Teil des Hologramms 15 darstellen. Die spektrale Farbe und eine Ausdehnung der einzelnen Bereiche entlang der ausgezeichneten Richtung 20 legen ein Farbmuster fest. Die ausgezeichnete Richtung 20 stimmt hierbei mit einer Scanrichtung 22 überein (vergleiche Fig. 1), entlang derer das kohärente Licht 11 vorzugsweise schrittweise das Hologramm in das holografische Aufzeichnungsmaterial 4 belichtet hat. Ist das durch die Bereiche 19 festgelegte Farbmuster anhand des Individualisierungsmusters oder eines Teils des Individualisierungsmusters errechnet, so lässt sich verifizieren, ob das Farbmuster zu dem sichtbaren Individualisierungsmuster gehört oder ob das Hologramm nicht korrekt hergestellt wurde und somit eine Fälschung darstellt. Es ergibt sich, dass auch zwei oder mehr als drei Farben und/oder andere als die hier angegebenen Farben verwendet werden können, insbesondere auch Farben im UV- oder IR-Spektralbereich.

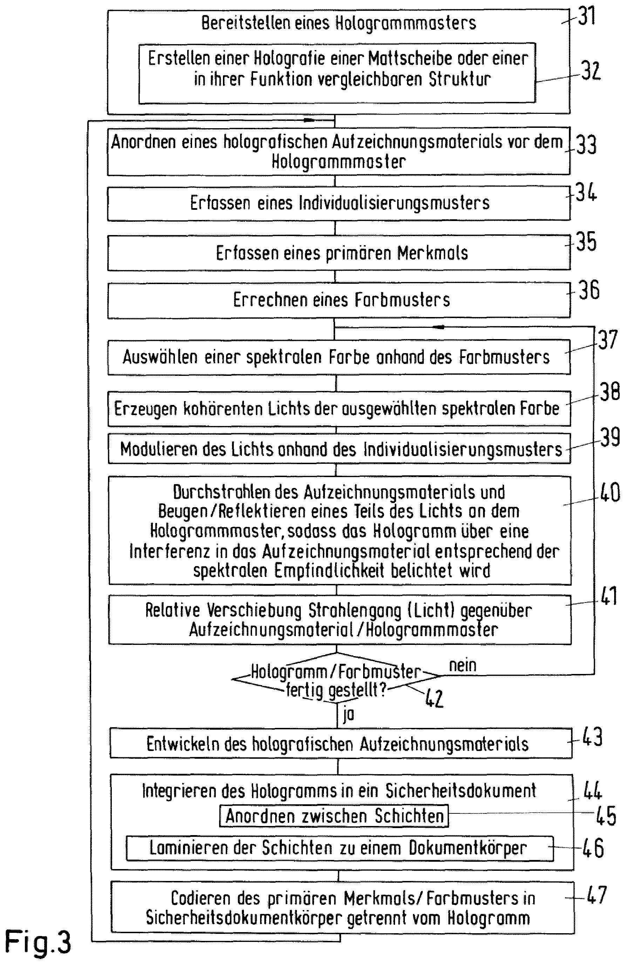

Anhand von Fig. 3 soll ein Verfahren zur Herstellung eines Hologramms und eines Sicherheitsdokuments noch einmal erläutert werden. In Fig. 3 ist schematisch ein Verfahren zur Herstellung eines Sicherheitsdokuments als Blockdiagramm dargestellt, welches ein Verfahren zum Herstellen eines Hologramms umfasst. Zur Herstellung eines Hologramms wird zunächst ein Hologrammmaster bereitgestellt 31. Dieses kann in einer Ausführungsform der Erfindung den einmaligen Schritt des Herstellens einer Holografie einer Mattscheibe 32 umfassen. Eine solche Herstellung ist beispielhaft in der EP 0 896 260 A2 beschrieben. Zunächst wird ein Transmissionshologramm der Mattscheibe in ein Transmissionshologramm mit verschiedenen spektralen Wellenlängen (Farben) abgebildet. Anschließend wird das Transmissionshologramm ebenfalls für die mehreren spektralen Wellenlängen so rekonstruiert, dass die Rekonstruktion in ein weiteres holografisches Aufzeichnungsmaterial erfolgt und zum Erzeugen eines Reflexionshologramms der Mattscheibe für die verschiedenen spektralen Wellenlängen (Farben) genutzt wird. Alternativ kann eine reflektierende sägezahnartige Struktur hergestellt werden, die beispielhaft in DE 20 2007 06796 U1 beschrieben ist. Die verspiegelten Sägezahnflächen weisen Abmessungen auf, die groß gegen die Wellenlängen des Lichts sind, das zur Herstellung des Hologramms verwendet werden soll. Eine solche sägezahnartige Struktur erfüllt als Hologrammmaster eine vergleichbare Funktion wie ein Hologramm einer Mattscheibe.

Vor dem bereitgestellten Hologrammmaster wird ein holografisches Aufzeichnungsmaterial angeordnet 33. Um das Hologramm individualisieren zu können, wird ein Individualisierungsmuster 34 erfasst. Das Individualisierungsmuster oder Teile hiervon können als primäres Merkmal verwendet werden, welches zum Errechnen eines Farbmusters mit einem eindeutigen, jedoch nicht umkehrbaren Rechenalgorithmus genutzt wird 35. Soll nicht das Individualisierungsmuster als primäres Merkmal verwendet werden, so kann vor dem Errechnen des vorgegebenen Farbmusters ein primäres Merkmal erfasst werden 36. Alternativ kann das Farbmuster auch direkt vorgegeben bzw. erfasst werden. Anhand des errechneten vorgegebenen Farbmusters wird eine von mehreren verschiedenen spektralen Farben ausgewählt 37. Mittels einer Lichtquelle wird monochromatisches kohärentes Licht der ausgewählten Spektralfarbe erzeugt 38. In der Regel wird das Licht in einem Laser erzeugt, der bereits monochromatisches Licht erzeugt. Ansonsten wird das kohärente Licht monochromatisiert. Eine Auswahl der spektralen Farben kann bei einem so genannten durchstimmbaren Laser, der monochromatisches Licht ausgewählt aus einem Spektralbereich erzeugen kann, über eine Ansteuerung erfolgen. Wird das Licht unterschiedlicher spektraler Farben mittels mehrerer Laser erzeugt, so können diese geschaltet betreiben werden. Eine Auswahl kann auch über optische Elemente, Blenden, ein Farbrad oder Ähnliches erfolgen.

Alternativ oder zusätzlich können ein oder mehrere durchstimmbare Laser verwendet werden. Diese können beispielsweise unter Verwendung optischer parametrischer Oszillatoren realisiert werden.

Das monochromatische kohärente Licht der ausgewählten spektralen Farbe wird mittels eines Spatial Light Modulators, beispielsweise eines LCD-Displays, welches mit dem Individualisierungsmuster angesteuert wird, moduliert 39. Mit dem modulierten kohärenten Licht wird das Aufzeichnungsmaterial durchstrahlt und ein Teil des Lichts an dem Hologrammmaster gebeugt und/oder reflektiert, so dass das Hologramm über eine Interferenz in dem holografischen Aufzeichnungsmaterial belichtet wird. Eine Belichtung wird so ausgeführt, dass sie an die spektrale Empfindlichkeit des holografischen Aufzeichnungsmaterials entsprechend der verwendeten spektralen Farbe angepasst wird 40. Anschließend wird eine relative Verschiebung des Strahlengangs (des Lichts) gegenüber dem Aufzeichnungsmaterial und Hologrammmaster ausgeführt 41 und überprüft 42, ob das Hologramm, d.h. das Farbmuster, fertig gestellt ist. Ist dies nicht der Fall, so wird das Verfahren mit dem Verfahrensschritt 37 Auswählen einer spektralen Farbe anhand des Farbmusters fortgesetzt. Ist das Hologramm hingegen fertig belichtet, wird das holografische Aufzeichnungsmaterial entwickelt 43.

Das fertige Hologramm wird anschließend in ein Sicherheitsdokument integriert 44. Hierzu wird es bevorzugt zwischen Schichten angeordnet 45, die anschließend zu einem Dokumentkörper laminiert werden 46. In das Sicherheitsdokument können weitere Sicherheitsmerkmale integriert sein. Zusätzlich ist bei einer bevorzugten Ausführungsform vorgesehen, dass das primäre Merkmal und/oder das vorgegebene Farbmuster in den Sicherheitsdokumentkörper getrennt von dem Hologramm, d.h. in das Sicherheitsdokument codiert werden 47. Hierdurch ist sichergestellt, dass das Farbmuster oder das primäre Merkmal, anhand dessen sich das Farbmuster errechnen lässt, für eine Verifizierung mit dem Sicherheitsdokument bereitgestellt werden. Wird das Individualisierungsmuster oder ein Teil hiervon zur Berechnung des vorgegebenen Farbmusters verwendet, kann die getrennte Codierung im Sicherheitsdokument unterbleiben.

Das Verfahren wird nun vorzugsweise beginnend mit dem Verfahrensschritt Anordnung des holografischen Aufzeichnungsmaterials vor dem Hologrammmaster 33 fortgesetzt. Dieses erfolgt beispielsweise, indem ein neuer Abschnitt eines auf einer Rolle aufgewickelten holografischen Aufzeichnungsmaterials vor den Hologrammmaster bewegt wird.

Bei einer anderen Ausführungsform ist der Hologrammmaster in eine Trommel integriert, über die das holografische Aufzeichnungsmaterial geführt wird. Bei einer solchen Ausführungsform wird die Relativbewegung zwischen dem holografischen Aufzeichnungsmaterial und dem Hologrammmaster einerseits und andererseits dem kohärenten (gegebenenfalls modulierten) Licht durch eine Drehbewegung der Trommel bewirkt. In jedem Fall sind das holografische Aufzeichnungsmaterial und der Hologrammmaster am Belichtungsort relativ zueinander in Reihe.

In Fig. 4 ist eine beispielhafte Ausführungsform einer Vorrichtung 50 zur Verifizierung eines Hologramms 51 bzw. eines Sicherheitsdokuments 52, in welches das Hologramm 51 integriert ist, dargestellt. Die Vorrichtung 50 zur Verifizierung umfasst eine Lichtquelle 53, die zeitgleich oder zeitversetzt Licht der verschiedenen spektralen Farben emittieren kann. Die Lichtquelle 53 ist relativ zu dem Hologramm 51 so angeordnet, dass das rekonstruierte Hologramm von einer Erfassungseinheit 54, die beispielsweise als Kamera oder CCD ausgebildet ist, spektral erfasst werden kann. Eine Steuerung 55 steuert sowohl die Lichtquelle als auch die Erfassungseinheit. Ferner umfasst die Steuereinheit eine Auswerteeinheit 56, die anhand des spektral aufgelöst erfassten Hologramms 51 das Farbmuster ermitteln kann. Bei einer Ausführungsform umfasst die Steuerung 55 eine Berechnungseinheit 57, die in der Lage ist, anhand eines primären Merkmals, beispielsweise des erfassten Individualisierungsmusters, das zugehörige Farbmuster zu errechnen. Über eine Vergleichseinheit 58 wird das ermittelte Farbmuster mit dem errechneten Farbmuster verglichen. Stimmen diese beiden überein, so gilt das Hologramm 51 bzw. dieses Sicherheitsmerkmal des Sicherheitsdokuments als echt verifiziert. Zusätzlich oder alternativ zu der Berechnungseinheit kann die Vorrichtung 50 eine weitere Erfassungseinheit 59, die beispielsweise als Chipkartenleser ausgebildet ist, umfassen, um Informationen, im dargestellten Beispiel beispielsweise aus einem Chip 60 des Sicherheitsdokuments 52, auszulesen. Die aus dem Chip 60 ausgelesenen Informationen können beispielsweise kryptologisch verschlüsselt das Farbmuster umfassen, welches das korrekte Hologramm 51 des Sicherheitsdokuments 52 aufweisen soll. Ebenso ist es möglich, dass der Chip 60 Informationen über ein primäres Merkmal umfasst, die zur Berechnung des Farbmusters herangezogen werden, um das errechnete Farbmuster mit dem beobachteten Farbmuster zu vergleichen, um hierüber die Verifizierung des Hologramms 51 bzw. des Sicherheitsdokuments 52 auszuführen.

Bei einer Ausführungsform umfasst die Auswerteeinheit (56) ein Analysemodul, dass ein Individualisierungsmuster des Hologramms (15) als das primäre Merkmal ermittelt.

### Bezugszeichenliste

- 1: Vorrichtung zum Herstellen eines Hologramms
- 2: Hologrammmaster
- 3: Führung
- 4: holografisches Aufzeichnungsmaterial
- 5: Lichtquelle
- 6: Laser
- 7: Zusammenführ- und Auswahleinheit
- 8: kohärentes Licht
- 9: Umlenkspiegel
- 10: Spatial Light Modulator
- 11: moduliertes kohärentes Licht
- 12: Steuereinheit
- 13: Antriebseinheit
- 14: Berechnungseinheit
- 15: Hologramm
- 16: Name
- 17: Gesicht
- 18: Struktur
- 19: Bereiche
- 20: ausgezeichnete Richtung
- 21: Längsseite
- 22: Scanrichtung
- 31: Bereitstellen eines Hologramms
- 32: Erstellen einer Holografie einer Mattscheibe
- 33: Anordnen eines holografischen Aufzeichnungsmaterials vor dem Hologrammmaster
- 34: Erfassen eines Individualisierungsmusters
- 35: Errechnen eines Farbmusters
- 36: Erfassen eines primären Merkmals
- 37: Auswählen einer spektralen Farbe anhand des Farbmusters
- 38: Erzeugen kohärenten Lichts der ausgewählten spektralen Farbe
- 39: Modulieren des Lichts anhand des Individualisierungsmusters
- 40: Durchstrahlen des Aufzeichnungsmaterials und Beugen/Reflektieren eines Teil des Lichts an dem Hologrammmaster
- 41: relative Verschiebung des Strahlengangs gegenüber dem Aufzeichnungsmaterial/Hologrammmaster
- 42: Abfrage, ob Hologramm/Farbmuster fertig gestellt ist
- 43: Entwickeln des holografischen Aufzeichnungsmaterials
- 44: Integrieren des Hologramms in ein Sicherheitsdokument
- 45: Anordnen des Hologramms zwischen Schichten
- 46: Laminieren der Schichten zu einem Dokumentkörper
- 47: Codieren eines primären Merkmals/Farbmusters in den Sicherheitsdokumentkörper getrennt vom Hologramm
- 50: Vorrichtung zur Verifizierung eines Hologramms/Sicherheitsdokuments
- 51: Hologramm
- 52: Sicherheitsdokument
- 53: Lichtquelle
- 54: Erfassungseinheit
- 55: Steuerung
- 56: Auswerteeinheit
- 57: Berechnungseinheit
- 58: Vergleichseinheit
- 59: weitere Erfassungseinheit
- 60: Chip

## Patentansprüche

1. Hologramm (15) als Sicherheitsmerkmal, **dadurch gekennzeichnet, dass** das Hologramm (15) zumindest entlang einer ausgezeichneten Richtung (20) Bereiche (19) unterschiedlicher spektraler Farben nach einem vorgegebenen Farbmuster aufweist, wobei die einzelnen Bereiche jeweils als Volumenhologramme ausgeführt sind und wobei die unterschiedlichen spektralen Farben des Hologramms (15) im sichtbaren Spektralbereich liegen und bei einer Rekonstruktion mit einer weißen Lichtquelle (5), die Licht (8, 11) der Wellenlängen der unterschiedlichen spektralen Farben umfasst, von einem menschlichen Betrachter unter einer vorgegebenen Beleuchtungswinkel-Betrachtungswinkel-Geometrie zeitgleich die unterschiedliche spektrale Farben aufweisenden Bereiche (19) als ein farbiges Hologramm (15) wahrgenommen werden,
wobei die einzelnen Bereiche (19) des Hologramms (15) für die unterschiedlichen spektralen Farben jeweils eine gleiche Rekonstruktionsgeometrie aufweisen, wobei die Beugungseffizienz des Hologramms (15) bezüglich der unterschiedlichen spektralen Farben nahezu identisch ist, und wobei das Hologramm (15) ein Individualisierungsmuster umfasst.

2. Hologramm (15) nach Anspruch 1, **dadurch gekennzeichnet, dass** das Hologramm (15) entlang der ausgezeichneten Richtung (20) aus monochromatischen Teilhologrammen unterschiedlicher spektraler Farbe besteht.

3. Hologramm (15) nach Anspruch 1 oder 2, **dadurch gekennzeichnet, dass** die Teilhologramme streifenförmig sind.

4. Hologramm (15) nach einem der Ansprüche 1 bis 3, **dadurch gekennzeichnet, dass** das Individualisierungsmuster ein Passbild einer Person ist.

5. Hologramm (15) nach einem der Ansprüche 1 bis 4, **dadurch gekennzeichnet, dass** in einer Aufeinanderfolge und/oder einer Ausdehnung der einzelnen unterschiedlichen spektralen Farben entlang der mindestens einen Richtung (20) ein sekundäres Sicherheitsmerkmal codiert ist.

6. Hologramm (15) nach einem der Ansprüche 1 bis 5, **dadurch gekennzeichnet, dass** das sekundäre Sicherheitsmerkmal eineindeutig aus einem primären Merkmal in eindeutiger, jedoch nicht umkehrbarer Weise errechenbar ist.

7. Hologramm (15) nach einem der Ansprüche 1 bis 6, **dadurch gekennzeichnet, dass** das Hologramm (15) hinsichtlich einer Rekonstruktion für die unterschiedlichen spektralen Farben eine identische Winkelselektivität aufweist.

8. Sicherheitsdokument mit einem Hologramm (15) nach einem der Ansprüche 1 bis 7.

9. Sicherheitsdokument nach Anspruch 8, **dadurch gekennzeichnet, dass** das primäre Sicherheitsmerkmal das Individualisierungsmuster, ein alphanumerisch aufgebrachter Text, ein Strichcode, eine in einen Chip eingespeicherte Datenfolge oder eine Kombination hieraus ist.

10. Sicherheitsdokument nach einem der Ansprüche 8 oder 9, **dadurch gekennzeichnet, dass** das primäre Sicherheitsmerkmal getrennt von dem Hologramm (15) in dem Sicherheitsdokument gespeichert ist.

11. Sicherheitsdokument nach einem der Ansprüche 9 oder 10, **dadurch gekennzeichnet, dass** der alphanumerisch aufgebrachte Text einen Name und/oder ein Geburtsdatum und/oder einen Vorname und/oder einen Wohnort und/oder eine Adresse einer Person, die das Sicherheitsdokument identifizieren, umfasst.

## Claims

1. Hologram (15) as a security feature, **characterised in that** the hologram (15) comprises, at least along one preferred direction (20), regions (19) of different spectral colours in accordance with a specified colour pattern, wherein the individual regions are configured in each case as volume holograms, and wherein the different spectral colours of the hologram (15) lie in the visible spectral range and, in a reconstruction with a white light source (5) which comprises light (8, 11) of the wavelengths of the different spectral colours, the regions (19) comprising the different spectral colours are perceived by a human observer, under a predetermined lighting angle-observation angle geometry, as a coloured hologram (15),
wherein the individual regions (19) of the hologram (15) comprise for the different spectral colours in each case a same reconstruction geometry, wherein the diffraction efficiency of the hologram (15) is almost identical in respect of the different spectral colours, and wherein the hologram (15) comprises an individualisation pattern.

2. Hologram (15) according to claim 1, **characterised in that** the hologram (15) consists along the preferred direction (20) of monochromatic part holograms of different spectral colours.

3. Hologram (15) according to claim 1 or 2, **characterised in that** the part holograms are of strip shape.

4. Hologram (15) according to any one of claims 1 to 3, **characterised in that** the individualisation pattern is a passport picture of a person.

5. Hologram (15) according to any one of claims 1 to 4, **characterised in that** a secondary security feature is coded in a sequence and/or an extension of the individual different spectral colours along the at least one direction (20).

6. Hologram (15) according to any one of claims 1 to 5, **characterised in that** the secondary security feature is calculable distinctly from a primary feature in a distinct but not reversible manner.

7. Hologram (15) according to any one of claims 1 to 6, **characterised in that** the hologram (15) exhibits an identical angle selectivity for the different spectral colours in respect of a reconstruction.

8. Security document with a hologram (15) according to any one of claims 1 to 7.

9. Security document according to claim 8, **characterised in that** the primary security feature is the individualisation pattern, an alphanumeric applied text, a barcode, a data sequence stored on a chip, or a combination thereof.

10. Security document according to claim 8 or 9, **characterised in that** the primary security feature is stored separately from the hologram (15) in the security document.

11. Security document according to any one of claims 9 or 10, **characterised in that** the alphanumeric applied text comprises a name and/or the date of birth and/or a forename and/or a place of residence and/or an address of a person, which identify the security document.

## Revendications

1. Hologramme (15) en tant que caractéristique de sécurité, **caractérisé en ce que** l'hologramme (15) présente, au moins le long d'une direction (20) spécifiée, des zones (19) de couleurs spectrales différentes selon un modèle de couleurs prédéfini, dans lequel les zones individuelles sont exécutées chacune en tant qu'hologramme volumique et dans lequel les différentes couleurs spectrales de l'hologramme (15) sont comprises dans le domaine spectral visible et, en cas de reconstruction avec une source de lumière blanche (5) qui comprend une lumière (8, 11) des longueurs d'onde des différentes couleurs spectrales, les zones (19) présentant simultanément les différentes couleurs spectrales sont perçues en tant qu'hologramme coloré (15) par un observateur humain sous une géométrie d'angle d'éclairage et d'angle d'observation prédéfinie,
dans lequel les zones (19) individuelles de l'hologramme (15) pour les différentes couleurs spectrales présentent chacune une même géométrie de reconstruction, dans lequel l'efficacité de diffraction de l'hologramme (15) en ce qui concerne les différentes couleurs spectrales est pratiquement identique, et dans lequel l'hologramme (15) comprend un modèle de personnalisation.

2. Hologramme (15) selon la revendication 1, **caractérisé en ce que** l'hologramme (15) est constitué, le long de la direction (20) spécifiée, de sous-hologrammes monochromatiques de différentes couleurs spectrales.

3. Hologramme (15) selon la revendication 1 ou 2, **caractérisé en ce que** les sous-hologrammes ont une forme de bande.

4. Hologramme (15) selon l'une quelconque des revendications 1 à 3, **caractérisé en ce que** le modèle de personnalisation est une photographie de passeport d'une personne.

5. Hologramme (15) selon l'une quelconque des revendications 1 à 4, **caractérisé en ce qu'**une caractéristique de sécurité secondaire est codée dans une succession et/ou une extension des différentes couleurs spectrales individuelles le long de l'au moins une direction (20).

6. Hologramme (15) selon l'une quelconque des revendications 1 à 5, **caractérisé en ce que** la caractéristique de sécurité secondaire peut être calculée explicitement à partir d'une caractéristique primaire d'une manière explicite, mais pas réversible.

7. Hologramme (15) selon l'une quelconque des revendications 1 à 6, **caractérisé en ce que** l'hologramme (15) présente une sélectivité angulaire identique en ce qui concerne une reconstruction pour les différentes couleurs spectrales.

8. Document de sécurité avec un hologramme (15) selon l'une quelconque des revendications 1 à 7.

9. Document de sécurité selon la revendication 8, **caractérisé en ce que** la caractéristique de sécurité primaire est le modèle de personnalisation, un texte appliqué alphanumériquement, un code à barres, une suite de données enregistrée dans une puce ou une combinaison de ceux-ci.

10. Document de sécurité selon l'une quelconque des revendications 8 ou 9, **caractérisé en ce que** la caractéristique de sécurité primaire est enregistrée dans le document de sécurité séparément de l'hologramme (15).

11. Document de sécurité selon l'une quelconque des revendications 9 ou 10, **caractérisé en ce que** le texte appliqué alphanumériquement comprend un nom et/ou une date de naissance et/ou un prénom et/ou un lieu de résidence et/ou une adresse d'une personne qui identifient le document de sécurité.
